(19) Europäisches Patentamt
European Patent Office
Office européen des brevets

(11) Veröffentlichungsnummer: **0 038 502**
**B1**

# (12) EUROPÄISCHE PATENTSCHRIFT

(45) Veröffentlichungstag der Patentschrift: **14.03.84**

(51) Int. Cl.³: **C 08 G 18/76,** C 08 G 18/70, C 08 G 18/08, C 08 K 11/00

(21) Anmeldenummer: **81102815.8**

(22) Anmeldetag: **13.04.81**

(54) **Verfahren zur Herstellung von Isocyanat-Polyadditionsprodukten und deren Verwendung als thermoplastische Pressmasse oder als reaktiver Füllstoff, insbesondere in einem Verfahren zur Herstellung von Polyurethankunststoffen.**

(30) Priorität: **23.04.80 DE 3015576**

(43) Veröffentlichungstag der Anmeldung: **28.10.81 Patentblatt 81/43**

(45) Bekanntmachung des Hinweises auf die Patenterteilung: **14.03.84 Patentblatt 84/11**

(84) Benannte Vertragsstaaten: **BE DE FR GB IT**

(56) Entgegenhaltungen:
**EP - A - 0 010 675**
**EP - A - 0 010 687**
**DE - A - 2 423 764**
**DE - B - 1 089 160**
**DE - C - 895 058**
**US - A - 4 143 008**

(73) Patentinhaber: **BAYER AG, Konzernverwaltung RP Patentabteilung, D-5090 Leverkusen 1 Bayerwerk (DE)**

(72) Erfinder: **Reischl, Artur, Dr., H.T.-von-Böttinger-Strasse 19, D-5090 Leverkusen (DE)**

**EP 0 038 502 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Isocyanat-Polyadditionsprodukten und deren Verwendung als thermoplastische Preßmasse oder als reaktiver Füllstoff, insbesondere in einem Verfahren zur Herstellung von Polyurethankunststoffen

Die vorliegende Erfindung betrifft ein Verfahren zur kontinuierlichen Herstellung von Urethangruppen aufweisenden Isocyanat-Polyadditionsprodukten aus im wesentlichen monomerenfreien, jedoch noch freie Isocyanatgruppen enthaltenden, verzweigten oder vernetzten Destillationsrückständen aus der großtechnischen Produktion von Toluylendiisocyanaten und kurzkettigen, alkoholische Hydroxylgruppen aufweisenden Verbindungen. Die erfindungsgemäß erhaltenen Polyadditionsprodukte sind neuartige Rohstoffe für die Herstellung von Kunststoffen, insbesondere Preßmassen, und eignen auch als reaktive Füllstoffe für verschiedenartigste Kunststoffe, welchen sie neben verbesserten physikalischen Eigenschaften auch eine erhöhte Flammwidrigkeit verleihen.

Unter den technisch realisierbaren Bedingungen fallen bei der Destillation des Phosgenierungsproduktes von Toluylendiaminen immer höhermolekulare, unlösliche Folgeprodukte mit Uretdion-, Isocyanurat-, Carbodiimid-, Uretonimin-, Harnstoff- und Biuretgruppen an. Je nach Reinheit der Ausgangsamine entstehen bei der Phosgenierung außerdem Methylbenzimidazolone, die im Laufe der Zeit mit den vorhandenen freien Isocyanatgruppen unter Molekülvergrößerung zu unlöslichen, vernetzten Produkten biuretisiert werden.

Ein partielles Recycling dieser bei der großtechnischen Herstellung von Toluylendiisocyanat (im folgenden »TDI« genannt) in riesigen Mengen unvermeidlich anfallenden TDI-Destillationsrückstände gelang in letzter Zeit durch alkalische Hydrolyse. Es wird dabei allerdings nur ein relativ kleiner Anteil an Toluylendiaminen während einer außerordentlich langsam ablaufenden Hydrolyse rückgewonnen, der nur mit großem Aufwand in reiner Form isoliert werden kann.

Mehr Erfolg, die Ausbeute an 2,4-TDI (»T 100«) bzw. an Isomerengemischen aus 80% 2,4-TDI und 20% 2,6-TDI (»T 80«) oder 65% 2,4-TDI und 35% 2,6-TDI (»T 65«), jeweils bezogen auf eingesetztes Toluylendiamin, zu maximieren, brachten die sogenannten Fallrohrverdampfer (DE-OS 2 035 731). Dabei fallen verringerte Mengen einer fast monomerenfreien, jedoch noch ca. 25 Gew.-% freie Isocyanatgruppen enthaltenden Sumpfphase an (nachfolgend als »TDI-Rückstandsteer« bezeichnet), die in der Praxis häufig mit Wasser »denaturiert« wird. Bei diesem Denaturierungsproß reagieren die noch vorhandenen freien Isocyanatgruppen des TDI-Rückstandsteers zu einem erheblichen Teil mit dem Wasser unter starker Kohlendioxidentwicklung und Ausbildung von zusätzlichen Harnstoff- und Biuretgruppierung, so daß nur noch ein geringer Rest (meist ca. 1 bis 10 Gew.-%) an inkludierten, freien Isocyanatgruppen übrig bleibt. (Im folgenden werden diese mit Wasser behandelten, vernetzten, im wesentlichen monofreien Produkte als »denaturierte« TDI-Destillationsrückstände bezeichnet). Beim Lagern in Wasser oder in feuchtem Zustand nimmt der Isocyanatgehalt im Verlauf längerer Zeiträume allmählich weiter ab.

Die so erhaltenen, schlackenartigen, Polyharnstoff-, Biuret-, Uretdion-, Carbodiimid- und Isocyanuratgruppen aufweisenden denaturierten TDI-Rückstände sind, im Gegensatz zu der vor der Wasserdenaturierung noch reichlich NCO-haltigen, vergleichsweise niedermolekularen aber nicht lagerbeständigen Sumpfphase der Destillation, in allen gebräuchlichen Lösungsmitteln völlig unlöslich. Oberhalb von 250±30°C beginnen sie teilweise zu schmelzen, wobei Zersetzung unter Gasentwicklung auftritt. Eine technisch und ökonomisch interessante Verwertungsmöglichkeit für diese denaturierten TDI-Rückstandsteere besteht gemäß einer Reihe von eigenen älteren Vorschlägen in deren nachträglicher chemischer Modifizierung und mechanischen Zerkleinerung in geeigneten Mahlwerken, wodurch sie in brauchbare Ausgangsmaterialien (insbesondere reaktive Füllstoffe) für die Kunststoffherstellung umgewandelt werden.

Die Verwendung im wesentlichen monomerenfreier, vernetzter, unlöslicher, nicht unzersetzt schmelzbarer TDI-Destillationsrückstände als Füllstoff (<800 µm) bei der Umsetzung mit PU-bildenden Komponenten sind in der älteren Anmeldung EP-A 10 687 der Anmelderin beschrieben.

In der US 4 143 008 ist eine Verarbeitung von etwa 12 bis 30 Gew.-% monomeres Toluylendiisocyanat (TDI) enthaltenden Destillationsrückständen der Toluylendiisocyanat-Herstellung mit überwiegend aliphatische Hydroxylgruppen aufweisenden Polyhyroxylverbindungen beschrieben, wobei der Destillationsrückstand in gelöster Form eingesetzt wird oder in feingepulverter Form, z. B. zusammen mit Asphalt oder Sägemehl, schmelzverpreßt wird. Beispiel 8 beschreibt die Umsetzung einer 20%igen Dichlorbenzollösung mit einer Mischung aus einem Teil eines Trimethylolpropan-Propylenoxid-Addukts und 100 Teilen Sand, wobei sich nach dem Erhitzen ein 3% Polyaddukt enthaltendes, kompaktes Formsand-Formstück erhalten läßt.

Versucht man jedoch einen Gehalt von <12% monomerem TDI in TDI-Destillationsrückständen einzustellen, so verändert sich bei den hierzu notwendigen hohen Sumpftemperaturen der TDI-Rückstand unter Selbstvernetzung und Bildung stabiler Bindungen (z. B. Cyanurat-Bindungen) aus freien Isocyanat- oder wiederspaltbaren (z. B. Uretdion)-Gruppen. Dabei wird der Rückstand schnell unlöslich, zunehmend höherschmelzend und vernetzt und gibt praktisch kein monomeres TDI mehr ab, da letzteres in den Rückstand einvernetzt wird.

Ein Rückstand mit <12% monomerem TDI, vorzugsweise nach dem Verfahren der Fallrohrverdampfung (DE-OS 2 035 731, DE 1 089 160) hergestellt, der praktisch frei von monomerem TDI ist, aber noch

NCO-Gruppen enthält, läßt sich wegen seiner Unlöslichkeit und seines hohen Erweichungspunktes nicht mehr mit Polyhydroxylverbindungen bei den erforderlichen hohen Temperaturen in unverdünnter Form vermischen. Es ist daher mit dem erfindungsgemäßen Destillationsrückstand auch eine Umsetzung nach dem Verfahren der DE-PS 1 089 160, wo die Verwendung von 20–60% Diisocyanat in leicht abspaltbarer Form enthaltenden Destillationsrückständen zur Umsetzung mit Verbindungen mit mindestens zwei reaktionsfähigen Wasserstoffatomen, unter Bildung von Kunststoffen beschrieben wird, nicht möglich.

In der DE-OS 2 423 761 der Anmelderin wird erwähnt, Diisocyanate mit Diaminen, gegebenenfalls sogar mit gelösten Anteilen an Rückständen der Destillation, in Schneckenmaschinen umzusetzen. Derartige Umsetzungen von TDI-Rückständen mit Diaminen verlaufen jedoch unter sehr hoher Reaktionsgeschwindigkeit, welche alsbald zur Blockierung der Schneckenmaschinen führen und sehr hochschmelzende Produkte bilden, die extrem spröde Eigenschaften aufweisen, für welche im allgemeinen auch keine Verwendungsmöglichkeiten bestehen.

Überraschenderweise wurde nunmehr gefunden, daß man auch die schwer handhabbaren, nicht mit Wasser denaturierten und daher noch größere Mengen an freien Isocyanatgruppen enthaltenden TDI-Rückstandsteermassen direkt in Urethangruppen aufweisende Polyadditionsprodukte überführen kann, wenn man sie mit niedermolekularen, Hydroxylgruppen aufweisenden Verbindungen kontinuierlich in vorzugsweise mehrwelligen Schneckenmaschinen mit selbstreinigender Schneckengeometrie unter weiter unten näher gekennzeichneten Bedingungen reagieren läßt. Führt man dagegen die Polyadditionsreaktion zwischen TDI-Rückstandsteer und niedermolekularem Polyol nach dem an sich bekannten Gießverfahren aus, so erfolgt (da oberhalb der Schmelztemperatur des TDI-Rückstandsteers von meist über 100°C gearbeitet werden muß) beim Einrühren von beispielsweise Ethylenglykol oder Diethylenglykol eine fast explosionsartige exotherme Reaktion unter starker Gasentwicklung. Dabei steigt, auch wenn Mengen von weniger als 0,5 kg verarbeitet werden, die Reaktionstemperatur weit über 200°C unter teilweiser Zersetzung und völliger Versprödung des Materials. Größere Reaktionsansätze erhitzen sich sogar auf Temperaturen, die einen Schwelbrand der Zersetzungsprodukte auslösen können.

Die Verwendung eines inerten Lösungsmittel zwecks Abfuhr der Reaktionswärme ist (abgesehen von ökologischen und ökonomischen Gründen) inder Praxis auch nicht möglich. Vergleichsversuche in einer Rührapparatur zeigten, daß die bei der Reaktion entstehenden vernetzten Polyadditionsprodukte in grober Schlackenform anfallen, wobei das flüssige Reaktionsmedium — sogar nach aufwendiger Zerkleinerung — nicht bis zur Geruchsfreiheit entfernt werden kann.

Gegenstand der Erfindung ist somit ein Verfahren zur Herstellung von Urethangruppen aufweisenden Polyadditionsprodukten aus isocyanatgruppenhaltigen Destillationsrückständen der technischen TDI-Produktion und Polyhydroxylverbindungen, welches dadurch gekennzeichnet ist, daß man

a) einen weniger als 12 Gew.-% monomeres TDI enthaltenden, bevorzugt im wesentlichen monomerenfreien TDI-Rückstandsteer, der bei der Entfernung von monomerem TDI aus dem rohen Phosgenierungsprodukt von Toluylendiaminen als Sumpfphase anfällt und welcher einen Gehalt an freien NCO-Gruppen von weniger als 35 Gew.-%, bevorzugt weniger als 30 Gew.-%, besonders bevorzugt weniger als 27 Gew.-%, und einen Erweichungspunkt unterhalb von 200°C, bevorzugt zwischen 50 und 160°C, aufweist, mit
b) einer Verbindung mit mindestens 2 alkoholischen Hydroxylgruppen und einem mittleren Molekulargewicht (Zahlenmittel) unterhalb von 600, vorzugsweise einem Glykol mit einem Molekulargewicht zwischen 62 und 300,

in einem NCO/OH-Äquivalentverhältnis von weniger als 1,5: 1, bevorzugt zwischen 0,4 : 1 und 1 : 1, besonders bevorzugt zwischen 0,75 : 1 und 0,95 : 1, kontinuierlich in einer Reaktionsschneckenmaschine mit selbstreinigender Schneckengeometrie bei Temperaturen von 50 bis 220°C, bevorzugt von 70 bis 180°C, gegebenenfalls in Anwesenheit von Zusatzstoffen, zur Reaktion bringt.

Es ist als überraschend anzusehen, daß trotz der Polyfunktionalität der Ausgangskomponenten und der beträchtlichen Reaktionswärme beim erfindungsgemäßen Verfahren Polyadditionsprodukte in granulierter oder pulverisierter Form erhalten werden können, welche thermoplastisch verarbeitbar sind und sich unter Druck zu Formkörpern mit unerwartet guten mechanischen Eigenschaften verpressen lassen. Es ist auch möglich, die Polyadditionsprodukte in feinteilig gemahlener Form als Reaktivfüllstoffe bei der Herstellung von Kunststoffen zwecks Verbesserung von deren physikalischen Eigenschaften mitzuverwenden.

Gegenstand der vorliegenden Erfindung ist daher auch die Verwendung der nach diesem Verfahren erhältlichen neuen, partiell verzweigten und/oder vernetzten Verfahrensprodukte als Rohstoff für Preßmassen oder als Aufbau- oder Mischkomponente bei der Herstellung von Kunststoffen, insbesondere von Polyurethankunststoffen nach dem Isocyanat-Polyadditionsverfahren.

Für die Durchführung des erfindungsgemäßen Verfahrens sind Schneckenmaschinen, wie sie dem Stand der Technik entsprechen und z. B. von H. Herrmann in »Schneckenmaschinen in der Verfahrenstechnik«, Springer Verlag, Berlin-Heidelberg-New York, 1972, S. 161-170 beschrieben

wurden, geeignet. Besonders geeignet sind mehrwellige, bevorzugt zweiwellige, zwei- und dreigängige Schneckenmaschinen mit gleichsinnig rotierenden, kommenden Schneckenwellen, die ständig einander und auch die innere Gehäusewand abschaben, beispielsweise gemäß DE-PS 862 668 oder DE-AS 2 302 564 (US-PS 3 963 679).

Vorteilhaft weisen die Schneckenwellen neben gewindeförmig ausgebildeten »Förderelementen« in Förderrichtung gesehen kurz nach der Einspeisung der beiden Reaktionskomponenten spezielle »Knetelemente« auf, wie sie z. B. in DE-PS 813 154 und DE-PS 940 109 beschrieben sind und die eine erhöhte Scher- und Mischwirkung haben. Auch an anderen Stellen in der Schneckenmaschine, z. B. in der Nähe des Produktaustritts, können derartige Knetelemente mit Vorteil eingesetzt werden.

Es werden bevorzugt solche Schneckenmaschinen eingesetzt, die eine ständige Selbstreinigung und Zwangsförderung bei schmalem Verweilzeitsprektrum ermöglichen. Weiterhin soll das Schneckensystem eine intensive Zwangskonvektion bewirken, welche neben intensiver Mischwirkung auch ausgezeichnete Wärmeübergangsbedingungen an der Gehäuseinnenwand zur Folge hat, was für die im erfindungsgemäßen Verfahren notwendige Temperaturkontrolle von großer Bedeutung ist.

Die flüssigen Ausgangsverbindungen werden bei der Durchführung des erfindungsgemäßen Verfahrens mittels geeigneter handelsüblicher Pumpen wie z. B. Kolben-, Membran-, Drehschieber- oder Zahnradpumpen (gegebenenfalls vorvermischt), Feststoffe mit Hilfe von geeigneten Feststoffdosiergeräten wie z. B. Schüttelrinnen, Dosierschnecken oder Dosierbandwaagen kontinuierlich im gewünschten Verhältnis in den kühl- und gegebenenfalls heizbaren Schneckenreaktor eingebracht.

Hauptausgangskomponente des erfindungsgemäßen Verfahrens sind die oben näher gekennzeichneten NCO-Gruppen aufweisenden TDI-Rückstandsteermassen, wie sie bei der großtechnischen Produktion von monomeren TDI anfallen. In speziellen Fällen kann der TDI-Rückstandsteer auch im Gemisch mit weiteren ein- und/oder mehrwertigen Isocyanaten eingesetzt werden. Aus ökonomischen Gründen werden solche zusätzlichen Isocyanate, wenn überhaupt, jedoch nur in untergeordneter Menge, d. h. weniger als ca. 50 Gew.-%, bevorzugt weniger als 30 Gew.-%, bezogen auf die Menge des TDI-Rückstandsteers, eingesetzt.

Als zusätzlich gegebenenfalls mitzuverwendende Isocyanate kommen insbesondere aromatische Polyisocyanate der Formel

$$R\,(NCO)_n$$

in Betracht, in welcher

n für eine ganze oder (im Falle der Verwendung von Isocyanatgemischen im statistischen Mittel) gebrochene Zahl von 1,5 bis 3, vorzugsweise für 2 steht und

R für einen gegebenenfalls durch einen oder mehrere Alkyl-, Cycloalkyl-, Alkoxy-, Phenoxy- oder Halogenreste substituierten und/oder gegebenenfalls Alkylenreste zwischen aromatischen Ringen als Brückenglieder aufweisenden aromatischen Kohlenwasserstoffrest mit insgesamt 6 bis 30 Kohlenstoffatomen, vorzugsweise für einen gegebenenfalls Methyl-substituierten oder Methylenbrücken aufweisenden aromatischen Kohlenwasserstoffrest mit insgesamt 6 bis 15 Kohlenstoffatomen steht.

Beispiele für derartige aromatische Diisocyanate sind monomeres 2,4-Diisocyanatotoluol, 2,6-Diisocyanatotoluol, aus diesen Isomeren bestehende Gemische, gegebenenfalls alkyl- oder halogensubstituiertes 4,4'-Diisocyanatodiphenylmethan und dessen Isomere, 4,4'-Diisocyanatodiphenylpropan, 1,4-Diisocyanato-2-chlor-benzol, 4,4'-Diisocyanato-3,3'-dichlordiphenylmethan, 1,4-Diisocyanato-3-methoxy-benzol, 1,4-Diisocyanato-3-phenoxybenzol und Diisocyanato-dimethyl-biphenyl.

Bei dem erfindungsgemäßen Verfahren gegebenenfalls einzusetzende monofunktionelle Isocyanate sind z. B. Phenyl- oder p-Tolylisocyanat; geeignete zusätzliche tri- und höherfunktionelle aromatische Polyisocyanate sind beispielsweise die in Phosgenierungsprodukten von Anilin-Formaldehyd-Kondensaten stets vorliegenden, mehr als difunktionellen Polyisocyanate der Diphenylmethanreihe oder, wenn auch von untergeordnetem Interesse, modifizierte, Urethan- oder Harnstoffgruppen aufweisende Polyisocyanate, beispielsweise das Additionsprodukt aus 5 Mol 4,4'-Diphenylmethandiisocyanat und 1 Mol Tripropylenglykol bzw. evtl. auch Fehlpartien aus der Herstellung solcher modifizierter Polyisocyanate. Bei Verwendung hochschmelzender Diisocyanate können in Sonderfällen geringe Mengen organischer Lösungsmittel zur Erniedrigung des Schmelzpunktes dienlich sein. Vorzugsweise werden, wenn überhaupt, nur solche zusätzliche Polyisocyanate eingesetzt, die unter den Temperaturbedingungen des erfindungsgemäßen Verfahrens flüssig sind.

Selbstverständlich können auch Mischungen aller genannten Isocyanate eingesetzt werden.

Als weitere Hauptausgangskomponente im erfindungsgemäßen Verfahren dienen alkoholische Gruppen aufweisende Verbindungen mit einem mittleren Molekulargewicht unter 600, bevorzugt unter 300.

Besonders geeignet sind niedermolekulare Glykole, beispielsweise Ethylen-, Diethylen-, Tri- und

Tetraethylenglykol oder die homologen Propylenglykole, aber auch die Sumpfrückstände, die bei der technischen Produktion von Ethylen-, bzw. Propylenglykol aus den entsprechenden Alkylenoxiden verbleiben und die bisher meistens in Heizkraftwerken verbrannt werden. Ferner eignen sich z. B. Butan-, Buten- und Hexandiol oder — wenn auch vorzugsweise nur im Gemisch mit Glykolen — niedermolekulare dreiwertige Alkohole wie z. B. Glycerin. Einwertige Alkohole, bevorzugt mit einem Siedepunkt über 150°C, können in speziellen Fällen, insbesondere bei Verwendung dreiwertiger Alkohole, ebenfalls mitverwendet werden. Dies empfiehlt sich auch vor allem dann, wenn sie zusätzlich eine dispergierende Wirkung bei späterer Abmischung der Verfahrensprodukte mit höhermolekularen, H-aciden Verbindungen besitzen. Weniger geeignet sind Glykole, die neben ihrer alkoholischen Funktion NH-gruppen oder Polyharnstoffgruppen aufweisen. Derartige Glykole leisten für die Ausbildung thermoplastischer Segmente im Polyadditionsprodukt nur einen sehr geringen Beitrag und werden daher vorwiegend nur in Mischung mit anderen Glykolen eingesetzt. Gut geeignet sind dagegen Glykole, die Ester-, Acetat- oder Ethergruppen aufweisen. Für das erfindungsgemäße Verfahren am meisten bevorzugt sind Ethylen-, Diethylen-, 1,2-Propylen- und Dipropylenglykol sowie 1,4-Butandiol und die obengenannten Destillationsrückstände aus der Ethylen- und Propylenglykolproduktion oder deren Mischungen.

In speziellen Fällen, wenn eine Hydrophilierung der erfindungsgemäßen Verfahrensprodukte erwünscht ist, können während oder nach der Isocyanatpolyadditionsreaktion kationische und/oder anionische und/oder zur Salzbildung befähigte Gruppen in das Polyadditionsprodukt eingeführt werden. Dies kann beispielsweise so erreicht werden, daß man gegenüber Isocyanaten reaktive Verbindungen mitverwendet, die tertiären Stickstoff oder Sulfonsäuregruppen enthalten (z. B. N-Methyldiethanolamin oder das Anlagerungsprodukt von Bisulfit an 2,3-Butendiol). Eine andere Möglichkeit besteht darin, die Verfahrensprodukte nachträglich zu hydrophilieren, indem man auf die ausreagierten, fein pulverisierten Polyadditionsprodukte $SO_3$ oder $ClSO_3H$ (in chlorierten Kohlenwasserstoffen als Suspensionsmittel) einwirken läßt, anschließend verseift und die Sulfonsäuregruppen z. B. mit Aminen, Ammoniak oder Alkali in die Salzform überführt.

Für die erfindungsgemäße Umsetzung mit den o. g. Hydroxylverbindungen kann der hochverzweigte und vernetzte TDI-Rückstandsteer in flüssigem oder festem Zustand eingesetzt werden, wobei es in jedem Fall möglich ist, thermoplastisch bearbeitbare Polyadditionsprodukte herzustellen. Produkte dieser Art sind bisher nicht bekannt geworden: So führt die oben erläuterte Denaturierung des TDI-Rückstandsteers mit Wasser zu Folgeprodukten, die auch unter extremen Bedingungen (z. B. Temperaturen weit über 200°C und über 100 bar Druck) wegen ihrer mangelnden Thermoplastizität nicht homogen verpreßt werden können. Vielmehr erhält man aus denaturiertem TDI-Rückstandsteer Preßlinge mit tablettenartiger Konsistenz, die zwischen den Fingern leicht zerrieben werden können.

Wie bereits erwähnt, kann der bei der Produktion von monomeren Toluylendiisocyanaten anfallende teerartige Destillationsrückstand je nach Schmelztemperatur nur kurzfristig (wenige Stunden) in flüssiger Form ausreichend niederviskos gehalten werden, um eine Dosierung mittels üblicher Pumpen zu ermöglichen, da die freien Isocyanatgruppen Vernetzungsreaktionen der verschiedensten Art eingehen. Es ist daher besonders zweckmäßig, den als Sumpfphase der Destillation frisch anfallenden TDI-Rückstandsteer direkt kontinuierlich (noch ca. 120 bis 180°C heiß), z. B. mittels einer Zahnradpumpe in eine der oben beschriebenen Reaktionsschneckenmaschinen zu fördern und dort der erfindungsgemäßen Polyadditionsreaktion mit alkoholische Hydroxylgruppen aufweisenden Verbindungen (die ebenfalls in flüssiger Form zudosiert werden können) zu unterwerfen. Die Verweilzeit und die Wärmeabfuhr durch Kühlung werden in der Schneckenmaschine so geregelt, daß die Austrittstemperatur der Polyadditionsprodukte 220°C, bevorzugt 180°C, nicht überschreitet und auch keine nachträgliche Überhitzung des extrudierten Materials eintritt, da sonst eine drastische Versprödung der Produkte und Zersetzungsreaktionen unter Gasentwicklung auftreten. Je nach Arbeitsweise treten die Urethangruppen enthaltenden Polyadditionsprodukte aus der Reaktionsschneckenmaschine entweder in zähflüssiger, schnell erstarrender Form oder — was besonders überraschend ist — als gut rieselfähiges Pulver aus.

Wie den Ausführungsbeispielen zu entnehmen ist, kann bei sonst gleichen Ausgangskomponenten und vergleichbaren Reaktionsbedingungen (z. B. Temperaturen zwischen 170 und 180°C) durch bloße Variation des Äquivalentverhältnisses von NCO- und OH-Gruppen die Konsistenz der Verfahrensprodukte in weiten Grenzen beeinflußt werden. So wird beispielsweise bei großem OH-Überschuß (Isocyanat-Kennzahlen unter 80) ein zähflüssiges Polyadditionsprodukt, bei geringem OH-Überschuß (Kennzahlen über 80) oder bei etwa äquivalenten Mengen an NCO- und OH-Gruppen ein von freien NCO-Gruppen im wesentlichen freies, pulverförmiges Produkt aus der Reaktionsschneckenmaschine entnommen. Ein eventueller Restisocyanatgehalt reagiert innerhalb weniger Minuten vollständig ab.

Wenn eine sofortige Verwendung des frisch anfallenden TDI-Rückstandsteers im erfindungsgemäßen Verfahren nicht möglich ist, dann kann auch nach mehrwöchiger Zwischenlagerung (bei Temperaturen möglichst unter 25°C) der Rückstandsteer noch im erfindungsgemäßen Verfahren in folgender Weise eingesetzt werden:

Zunächst wird die teerartige Sumpfphase der Destillation noch heiß (ca. 130 bis 180°C) aus der Destillationsanlage abgelassen und unter Kühlung und Ausschluß von Feuchtigkeit in Formen gebracht (z. B. ca. 1 bis 3 cm dicke Plattenformen), wobei der Teer rasch glasartig erstarrt. Nach der

Erstarrung wird das Produkt in einer geeigneten Zerkleinerungsmaschine, beispielsweise in einem Schneidgranulator oder einer Hammermühle, bei Temperaturen von vorzugsweise unter 25°C, insbesondere unter 10°C, auf eine Teilchengröße unter 1 cm, bevorzugt unter 0,5 cm, zertrümmert. Dieses unregelmäßige Granulat kann dann mit Hilfe einer Dosierschnecke und Schüttelrinne unter Stickstoffspülung in die mehrwellige Reaktionsschneckenmaschine eingezogen, aufgeheizt und in der oben beschriebenen Weise mit den alkoholische Hydroxylgruppen aufweisenden Verbindungen erfindungsgemäß umgesetzt werden. Bei beiden Verfahrensvarianten entstehen — etwa gleicher NCO-Gehalt des verwendeten TDI-Rückstandsteers, gleiche Temperaturführung und gleiches NCO/OH-Äquivalentverhältnis vorausgesetzt — in ihren Eigenschaften praktisch übereinstimmende Polyadditionsprodukte.

Gegenstand der vorliegenden Erfindung ist auch die Verwendung der erfindungsgemäß hergestellten, urethangruppen aufweisenden Polyadditionsprodukte als Preß- bzw. Sintermassen. Wie schon erwähnt, können die erfindungsgemäß erhaltenen Umsetzungsprodukte aus niedermolekularen Hydroxylverbindungen und TDI-Rückstandsteer (welche beliebig lange lagerfähig sind) unter Druck und erhöhter Temperatur zu Formkörpern verpreßt werden. Bevorzugt sind dabei Preßtemperaturen von 150 bis 230°C, insbesondere 170 bis 200°C und Preßdrücke zwischen 5 und 100, insbesondere zwischen 10 und 40 bar. Das Schüttgewicht der pulverförmigen erfindungsgemäßen Verfahrensprodukte liegt je nach Teilchengröße zwischen 400 und 900 g/l, so daß je nach Einstellung des Raumgewichtes überraschenderweise sowohl homogene Preßlinge (1,2 bis 1,3 $g/cm^3$) als auch solche mit zelliger Struktur (0,7 bis 1,2 $g/cm^3$) auch ohne Verwendung eines Treibmittels erhalten werden können. So hergestellte homogene Preßplatten zeichnen sich durch eine extrem hohe Härte, Steifigkeit und vergleichsweise gute Schlagzähigkeit und Biegefestigkeit aus. Ein weiterer wichtiger Vorteil ist ihre ausgeprägte Flammwidrigkeit.

Die erfindungsgemäß hergestellten Polyadditionsprodukte können, falls erwünscht, in der verschiedensten Weise modifiziert werden. So ist es beispielsweise möglich, die beiden Hauptausgangskomponenten des erfindungsgemäßen Verfahrens vor der Polyadditionsreaktion mit den verschiedensten Zusatzstoffen zu vermischen oder auch diese Zusatzstoffe erst in der Schneckenmaschine zuzudosieren. So kann man beispielsweise andere Kunststoffe, z. B. Polyamid, in der Weise mitverwenden, daß man sie in der Hydroxylgruppen aufweisenden Verbindung bei erhöhter Temperatur solvatisiert oder völlig löst. Danach wird in die Schneckenmaschine der TDI-Rückstandsteer eindosiert, der mit dem als Lösungsmittel für das Polyamid fungierenden Polyol (insbesondere Ethylenglykol oder Diethylenglykol) unter Polyaddition reagiert, so daß das Polyamid völlig homogen im Verfahrensprodukt verteilt bleibt. Man erreicht so eine weitere Steigerung der Thermoplastizität und Kerbschlagzähigkeit der Polyadditionsprodukte. Selbstverständlich ist es jedoch auch möglich, die Zusatzstoffe in heterogener Phase einzusetzen oder erst zu einem späteren Zeitpunkt in die erfindungsgemäß erhaltenen Verfahrensprodukte, beispielsweise mit Hilfe von Schneckenmaschinen oder Mischwalzwerken, einzuarbeiten. Umgekehrt kann natürlich auch das erfindungsgemäß erhaltene Polyadditionsprodukt als Füllstoff in andere Kunststoffe eingearbeitet werden. Alle diese Verfahrensvarianten ermöglichen sowohl hinsichtlich der Formgebungstechniken als auch hinsichtlich der erzielbaren Abwandlung und Verbesserung der physikalischen Eigenschaften und des Brandverhaltens der Verfahrensprodukte eine große Variationsvielfalt des erfindungsgemäßen Verfahrens und führen außerdem in vielen Fällen zu einer deutlichen Verbilligung sonst teuerer Kunststoffe, ohne daß deren wertvolle Eigenschaften verlorengehen.

Erfolgt die erfindungsgemäße Polyadditionsreaktion unter Verwendung eines Überschusses an alkoholischen Hydroxylgruppen, so erhält man Verfahrensprodukte, welche noch freie Hydroxylgruppen enthalten und die in Form feinteiliger Pulver (mittlere Teilchengröße bevorzugt unter 50 µm, besonders bevorzugt unter 10 µm) insbesondere als reaktionsfähige Füllstoffe bei der Herstellung von Polyurethankunststoffen (einschließlich Beschichtungs- und Fugendichtungsmassen sowie von wärmebeständigen Klebstoffen) mitverwendet werden können.

Die Herstellung von homogenen oder zelligen Polyurethankunststoffen kann nach den an sich bekannten Verfahren erfolgen, wobei die reaktive Gruppen (insbesondere Hydroxyalkyl- und Urethangruppen) aufweisenden Polyadditionsprodukte als neuartige Rohstoffe in der Funktion von vernetzungsfähigen Füllstoffen und gegebenenfalls auch Kettenverlängerungsmitteln eingesetzt werden.

Gegenstand der Erfindung ist somit auch ein Verfahren zur Herstellung von gegebenenfalls zellförmigen, flammwidrigen Polyurethankunststoffen durch Polyaddition von

A) Polyisocyanaten, sowie gegebenenfalls
B) gegenüber Isocyanaten reaktive Gruppen aufweisenden Verbindungen in Gegenwart von
C) im Sinne der Isocyanat-Polyadditionsreaktion reaktive Gruppen aufweisenden Füllstoffen sowie gegebenenfalls
D) Aktivatoren, Treibmitteln, weiteren Füllstoffen und weiteren an sich bekannten Zusatzstoffen,

welches dadurch gekennzeichnet ist, daß als Komponente C), gegebenenfalls nur anteilweise, die erfindungsgemäß hergestellten Polyurethangruppen enthaltenden Polyadditionsprodukte aus

TDI-Rückstandsteer und niedermolekularen Alkoholen eingesetzt werden.

Für die Herstellung der Polyurethankunststoffe geeignete Polyisocyanate, Zusatzstoffe sowie gegebenenfalls mitzuverwendende zusätzliche Verbindungen mit gegenüber Isocyanaten reaktiven Gruppen (insbesondere hoch- und niedermolekulare Polyole und Polyamine) sind dem Fachmann an sich bekannt und — ebenso wie geeignete Herstellverfahren — z. B. DE-OS 2 302 564, DE-OS 2 423 764 (US-PS 3 963 679) sowie DE-OS 2 550 796, 2 550 797 und 2 550 833 (US-PS 4 093 569 und 4 147 680) zu entnehmen.

Neben den Polyisocyanat-Polyadditionsreaktionen kommen für die Verwendung der erfindungsgemäß hergestellten Polyadditionsprodukte beliebige andere Reaktionen in Frage, an welchen die erfindungsgemäß erhaltenen Umsetzungsprodukte aus TDI-Rückstandsteer und Alkoholen über ihre reaktiven Gruppen, d. h. insbesondere Hydroxyl- und Urethangruppen bzw. auch olefinisch ungesättigte Gruppen (falls z. B. bei der Polyadditionsreaktion ungesättigte Alkohole eingesetzt oder die Produkte mit ungesättigten Carbonsäuren umgesetzt wurden), teilnehmen können. Beispiele hierfür sind u. a. Polykondensationsreaktionen von Carbonylverbindungen mit Aminoplast- und/oder Phenoplastmonomeren, Epoxyidharze, Cyanatharze und (Co)polymerisationsreaktionen mit Vinylmonomeren.

Die auf diese Weise erhaltenen homogenen oder zelligen Kunststoffe, insbesondere Polyurethanschaumstoffe, Beschichtungen, Lacke, Überzüge, Klebstoffe, Fugendichtungsmassen und Verleimungsmittel, zeichnen sich durch verbesserte physikalische Eigenschaften, insbesondere erhöhte Zugfestigkeit und verminderte Brennbarkeit aus. In Polyurethanrezepturen, in welchen sehr große Mengen an Isocyanaten vorgesehen sind (was häufig zu schwer zu regulierenden und die Eigenschaften der Polyurethankunststoffe schädigenden extrem hohen Reaktionstemperaturen führt), können bei Mitverwendung der erfindungsgemäßen Produkte relativ geringe Isocyanatmengen eingesetzt werden, so daß die Polyaddition bei schonenderen Reaktionstemperaturen abläuft. Häufig können die Eigenschaften der unter Verwendung der erfindungsgemäßen Polyadditionsprodukte hergestellten Kunststoffe durch Mitverwendung organischer und/oder anorganischer Füllstoffe noch zusätzlich variiert werden.

Von besonderem Interesse sind in diesem Zusammenhang lignocellulosehaltige Materialien (insbesondere Holzspäne und -abfälle), wie sie z. B. in DE-OS 2 325 926 (US-PS 3 870 664) genannt werden. So ist es insbesondere möglich, die erfindungsgemäß mit Alkoholen umgesetzten TDI-Rückstandsteermassen bei der Herstellung von Platten oder Formteilen durch Heißverpressen von mit einem geeigneten Bindemittel (z. B. Polyisocyanat und/oder Kondensationsprodukte des Formaldehyds mit Harnstoff, Melamin und/oder Phenol) vermischten lignocellulosehaltigen Fasern, Spänen oder Lagen in einer Menge bis zu ca. 95 Gew.-%, vorzugsweise 5 bis 60 Gew.-%, bezogen auf das Gesamtgewicht des Formkörpers, mitzuverwenden. Verfahren zur Herstellung solcher Werkstoffe werden z. B. in der schon genannten US-PS 3 870 665 sowie in DE-OS 1 669 759 und DE-AS 1 653 169 und der dort zitierten Literatur beschrieben.

Die folgenden Beispiele erläutern die vorliegende Erfindung. Wenn nicht anders vermerkt, sind Mengenangaben als Gewichtsteile bzw. Gewichtsprozente zu verstehen.

In den Beispielen wurden Toluylendiisocyanat-Destillationsrückstände verwendet, die bei der Vakuumdestillation von monomerem 2,4-/2,6-TDI (Isomerengemisch 80 : 20) aus dem rohen Phosgenierungsprodukt von TDA als Sumpfphase angefallen waren und als teerartige, 150 bis 180°C heiße, zähe Masse mit einem Gehalt von 21,0 bis 26,9 Gew.-% an freien Isocyanatgruppen isoliert wurden.

## Herstellungsbeispiele 1—11

Die in den folgenden Ausführungsbeispielen 1—11 verwendeten Reaktionsschneckenmaschinen I und II des Typs ZSK der Firma Werner & Pfleiderer (Bundesrepublik Deutschland) waren Doppelwellenextruder mit gleichsinnig rotierenden, kämmenden Schneckenwellen und waren aus gleich langen beheizbaren bzw. kühlbaren Segmenten aufgebaut.

| | Schneckenreaktor | |
|---|---|---|
| | I | II |
| Äußerer Wellendurchmesser [mm] | 530 | 500 |
| Länge [mm] | 2280 | 1600 |
| Anzahl der Segmente | 12 | 8 |

## Versuchsbeschreibung zu Reaktor I

In einer Kesselrührapparatur wurde ein teerartiger Toluylendiisocyanat-Destillationsrückstand A mit einem Gehalt von 26,9 Gew.-% an freien, weitgehend polymer gebundenen Isocyanatgruppen bei einer Temperatur von 100–110° C und unter 0,2 bar Stickstoffdruck in zähflüssigem Zustand gehalten und über eine beheizte Rohrleitung mittels einer Zahnradpumpe in das Segment 9 des Schneckenreaktors kontinuierlich eingeleitet. In das in Fließrichtung davorliegende Segment 6 wurde bei Raumtemperatur Diethylenglykol zudosiert. Die Reaktionspartner wurden unter exothermer Reaktion in der Schneckenmaschine intensiv durchmischt, wobei das Gehäuse mittels Wasser so gekühlt wurde, daß die Gehäusetemperatur unter 165° C blieb. Die in den Beispielen verwendeten Rezepturen sind Tabelle 1, die speziellen Reaktionsbedingungen Tabelle 2 zu entnehmen.

Die aus der Schneckenmaschine geförderten Reaktionsprodukte wurden auf Stahlblechen in 2–5 cm dicken Schichten gleichmäßig verteilt, in einem nicht beheizten Umluftschrank mindestens 1 Stunde lang unter allmählicher Abkühlung gelagert und dann in Polyethylensäcke abgefüllt. Für die spätere Verwendung (s. Verwendungsbeispiele 12—19) wurden die Produkte, soweit erforderlich mittels einer Hammermühle auf Teilchengrößen <1 mm gebracht bzw. zum Zwecke der Feinzerkleinerung (mittlere Teilchengrößen <200 µm) in einer Luftstrommühle bzw. zur Feinstzerkleinerung (mittlere Teilchengrößen <20 µm) in einer Luftstrahlmühle behandelt.

## Versuchsbeschreibung zu Reaktor II

Ein in der Toluylendiisocyanat-Produktion als Sumpfphase angefallener teerartiger TDI-Rückstand B, welcher nur 21,0 Gew.-% an freien, fast ausschließlich polymer gebundenen Isocyanatgruppen aufwies, wurde zunächst unter Ausschluß von Feuchtigkeit in Form von 1–2 cm dicken Platten abgekühlt und in einer Hammermühle auf eine Teilchengröße unter 5 mm zerkleinert.

Das abgekühlte, unregelmäßige Granulat wurde über eine Dosierschnecke in Segment 1 des Schneckenreaktors eingebracht und in den auf 180° C (Gehäusetemperatur) gehaltenen Segmenten 1–6 aufgeschmolzen. In Segment 6 wurde ohne weitere Wärmezufuhr das Diethylenglykol über eine Kolbenpumpe eingeleitet und mit dem TDI-Rückstand zur Reaktion gebracht. Im übrigen wurde wie oben bei Reaktor I angegeben verfahren.

Tabelle 1

Rezepturen (Mengen in Gew-.Tln.) zu Reaktor I

| | Beispiel | | | | | | |
|---|---|---|---|---|---|---|---|
| | 1 | 2 | 3 | 4 | 5 | 6 | 7 |
| TDI-Teer A | 65,4 | 68,8 | 70,2 | 71,5 | 72,6 | 73,7 | 74,7 |
| Diethylenglykol | 34,6 | 31,2 | 29,8 | 28,5 | 27,4 | 26,3 | 25,3 |
| Kennzahl | 60 | 75 | 80 | 85 | 90 | 95 | 100 |

Kennzahl = 100 × NCO/OH-Äquivalentverhältnis

Tabelle 2

Reaktionsbedingungen für Reaktor I

| | Beispiel | | | | | | |
|---|---|---|---|---|---|---|---|
| | 1 | 2 | 3 | 4 | 5 | 6 | 7 |
| Produktaustritts-temperatur (°C) | 160 | 165 | 170 | 175 | 185 | 185 | 190 |

| | |
|---|---|
| Gesamtdurchsatz (kg/h) | 60–70 |
| Wellendrehzahl ($min^{-1}$) | 270–320 |
| Verweilzeit der Reaktions-mischung (ca. min) | 1–2 |
| Gehäusetemperaturen (°C) | |
| Segmente | |
| 1–8 | 30 |
| 9–10 | 100–120 |
| 11–12 | 120–140 |

Bei großem OH-Überschuß (Beispiele 1 und 2; Kennzahlen <80) werden die Polyadditionsprodukte in sehr zähflüssigem Zustand aus dem Reaktor ausgetragen und erstarren sofort in unregelmäßiger Form. Bei höheren Kennzahlen (Beispiele 3–7) werden die gleichmäßig auf Stahlbleche in Schichten bis 5 cm Dicke ausgetragenen Produkte in grob schlackenartiger bis fein pulvriger Form erhalten und in einem nicht beheizten Umluftschrank abgekühlt. Nach 1 Stunde sind keine freien Isocyanatgruppen mehr nachweisbar. Die Erweichungs- bzw. Schmelzpunkte liegen bei Kennzahlen <80 zwischen 200–260° C, bei Kennzahlen <90 zwischen 290–320° C.

Die Verfahrensprodukte werden auch von siedendem Dimethylformamid lediglich angequollen; dagegen sind sie in siedendem Ethylenglykol unter Glykolyse (Abbaureaktion) löslich.

Tabelle 3

Rezepturen (Mengen in Gew-.Tln.) zu Reaktor II

| | Beispiel | | | |
|---|---|---|---|---|
| | 8 | 9 | 10 | 11 |
| TDI-Teer B (21,0 Gew.-% NCO) | 75,12 | 77,26 | 78,19 | 79,05 |
| Diethylenglykol | 24,88 | 22,74 | 21,81 | 20,95 |
| Kennzahl | 80 | 90 | 95 | 100 |

Tabelle 4

Reaktionsbedingungen für Reaktor II

| | Beispiel | | | |
|---|---|---|---|---|
| | 8 | 9 | 10 | 11 |
| Produktaustrittstemperatur (°C) | 145 | 160 | 180 | 185 |
| Gesamtdurchsatz (kg/h) | 22 | | | |
| Wellendrehzahl ($min^{-1}$) | 80–90 | | | |
| Verweilzeit des Reaktionsgemisches (ca. min.) | 2–3 | | | |
| Gehäusetemperatur | | | | |
| Segmente | | | | |
| 1–3 | 171–175°C | | | |
| 4–5 | 189–192°C | | | |
| 6–8 | 93–105°C | | | |

Die Polyadditionsprodukte wurden pulverförmig bis granulatartig aus der Schneckenmaschine ausgetragen. Beim Abkühlen bildeten die ca. 0,5–2 mm großen Primärteilchen – lockere Agglomerate von bis zu 10 mm ∅. Der Gehalt an freien NCO-Gruppen lag nach 1 Stunde bei den niedrigen Produktaustrittstemperaturen unter 2 Gew.-%, bei Produktaustrittstemperaturen über 175° C unter 0,2 Gew.-%. Die Verfahrensprodukte sind unter 300° C nicht schmelzbar.

Verwendungsbeispiele 12–15

(Verpressen ohne Füllstoffe)

Aus den erfindungsgemäß erhaltenen Polyadditionsprodukten wurden 2 und 4 mm dicke Preßplatten mit einem Raumgewicht von 1,25–1,32 g/cm³ hergestellt, wobei folgende allgemeine Arbeitsweise angewandt wurde:

Das mittels einer Hammermühle und/oder Luftstrahlmühle auf eine mittlere Teilchengröße von <300 µm zerkleinerte Reaktionsprodukt wird auf eine von einem Rahmen begrenzte Stahlplatte gleichmäßig aufgestreut und in einer auf 150–200° C beheizten Presse zunächst unter schwachem Druck 20–40 Sekunden lang vorgewämt, danach kurz entspannt und schließlich bei 40–50 bar verpreßt. Die Preßzeit beträgt ca. 30 Sekunden pro mm Plattendicke. Das nach Beispiel 1 erhaltene Reaktionsprodukt mit einem hohen Gehalt an Hydroxyalkylendgruppen wird gemäß Beispiel 13 in feinpulvriger Form mit der äquivalenten Menge an rohem 4,4'-Diphenylmethandiisocyanat (NCO-Gehalt: 30,1 Gew.-%) gleichmäßig benetzt und kann entweder sofort oder zu einem späteren Zeitpunkt verpreßt werden. Wegen der sehr hohen Wärmeformbeständigkeit der verpreßten Verfahrensprodukte kann sofort ohne Abkühlung entformt werden.

Die erfindungsgemäß erhaltenen, wasserabweisenden, chemikalienfesten und witterungsbeständigen Preßplatten bilden auch beim Beflammen mittels eines Sauerstoffgebläses keine Tropfen aus. Wird die Flamme nach mehreren Minuten entfernt, so erfolgt Selbstverlöschung.

Tabelle 5

| | Beispiel 12 | 13 | 14 | 15 |
|---|---|---|---|---|
| Produkt von Herstellungsbeispiel | 1 | 1 | 7 | 10 |
| Zusatz an rohem 4,4'-Diphenylmethandiisocyanat, bezogen auf Kennzahl | — | 100 | — | — |
| Preßtemperatur (°C) | 150 | 170 | 190 | 210 |
| Physikalische Eigenschaften | | | | |
| Kugeldruckhärte H30 (MPa) (DIN 53 456) | 285 | 318 | | 310 |
| Biegeversuch: (ISO R 178) | | | | |
| E-Modul (MPa) | 4600 | 4530 | | 4460 |
| Biegefestigkeit (MPa) | 91 | 48 | | 36 |
| Durchbiegung (%) | 2 | 1,2 | | 0,9 |
| Zugversuch: (DIN 53 455) | | | | |
| E-Modul (MPa) | 4520 | 5250 | | 4800 |
| Reißfestigkeit (MPa) | 56 | 33 | | 29 |

Die nach Beispiel 12 erhaltenen Preßplatten sind im Gegensatz zu Beispiel 13 sehr spröde.

Verwendungsbeispiele 15 – 19

(Verpressen mit Holzspänen)

Es werden 0,5 – 1,5 cm lange Späne aus Nadelhölzern mit einem Wassergehalt von 8,5 – 9,5 Gew.-% verwendet, die unmittelbar vor dem Einsatz gegebenenfalls mit rohem Diphenylmethandiisocyanat mit einem Isocyanatgehalt von 30,1 Gew.-% benetzt werden.

Aus den in der nachfolgenden Tabelle 6 gekennzeichneten Mischungen der beleimten Holzspäne und der erfindungsgemäß hergestellten Polyadditionsprodukte werden bei Preßtemperaturen von 170 – 210°C und einem Druck von 30 – 70 bar und 10 – 30 Sekunden Preßzeit pro mm Plattendicke 10 – 16 mm dicke Platten in folgender Art hergestellt:

a) Statistische Verteilung der Mischkomponenten (Beispiele 18, 19)
b) Sandwich-Aufbau mit einer Deckschicht ausschließlich aus erfindungsgemäß modifiziertem TDI-Rückstandsteer und reinem Holzspankern (Beispiel 16)
c) Integral-Spanplatten mit zunehmendem Gehalt an erfindungsgemäß modifiziertem TDI-Rückstandsteer von innen nach außen (Beispiel 17).

In allen Fällen werden die in der erforderlichen Reihenfolge auf Stahlbleche aufgestreuten Schichten in der Hitze in einem einzigen Preßvorgang zu Platten mit einem Raumgewicht von 750 – 900 kg/$m^3$ verbunden.

Tabelle 6

| Beispiel | Produkt aus Beispiel/ Gew.-Teile | Holz (Gew-. Teile) | Deckschicht Poly-additions-produkt (Gew.-%) | Holz (Gew.-%) | Zwischenschicht Poly-additions-produkt (Gew.-%) | Holz (Gew.-%) | Kern Holz (Gew-.%) |
|---|---|---|---|---|---|---|---|
| | 1 | 2 | 3 | 4 | 5 | 6 | 7 |
| 16 | 7/30 | 70 (6) | 100 | – | – | – | 100 (6) |
| 17 | 7/22 | 78 (6) | 75 | 25 (6) | 17 | 83 (6) | 100 (6) |
| 18 | 9/75 | 25 (0) | | | | | |
| 19 | 10/50 | 50 (6) | | | | | |

Spalten 1, 2:
Gesamtmenge des verwendeten, erfindungsgemäß modifizierten TDI-Rückstandsteers bzw. Holzes.
Spalten 3, 5:
Anteil des modifizierten TDI-Rückstandsteers in der jeweiligen Schicht.
Spalten 2, 4, 6, 7:
Anteil der Nadelholzspäne; in Klammern: %-Gehalt Beleimungsmittel (rohes Diphenylmethandiisocyanat), bezogen auf Holz.

Die nach den Beispielen 16–19 hergestellten Holzspanpreßplatten sind ein neuer Typ Spanplatte, der sich durch eine wesentliche Verbesserung folgender Eigenschaften auszeichnet: erhöhte Härte, Glätte und Biegefestigkeit, stark verringerte Wasserquellung und Brennbarkeit. In vielen Fällen ist eine Nachbearbeitung überflüssig, da Sägen und Bohren ohne Gratbildung möglich ist.

**Patentansprüche**

1. Verfahren zur Herstellung von Urethangruppen aufweisenden Polyadditionsprodukten aus isocyanatgruppenhaltigen Destillationsrückständen der technischen Toluylendiisocyanat-Produktion und Polyhydroxylverbindungen, dadurch gekennzeichnet, daß man

a) einen weniger als 12 Gew.-% monomeres Toluylendiisocyanat enthaltenden Destillationsrückstand, der bei der Entfernung von monomerem Toluylendiisocyanat aus dem rohen Phosgenierungsprodukt von Toluylendiaminen als Sumpfphase anfällt und welcher einen Gehalt an freien NCO-Gruppen von weniger als 35 Gew.-% und einen Erweichungspunkt unterhalb 200° C aufweist, mit

b) einer Verbindung mit mindestens 2 alkoholischen Hydroxylgruppen, gegebenenfalls ionischen und/oder zur Salzbildung befähigten Gruppen und einem mittleren Molekulargewicht von weniger als 600 in einem NCO/OH-Äquivalentverhältnis unterhalb von 1,5 : 1 kontinuierlich in einer Reaktionsschneckenmaschine mit selbstreinigender Schneckengeometrie bei Temperaturen von 50 bis 220° C zur Reaktion bringt.

2. Verfahren nach Anspruch 1, dadurch gekennzeichnet, daß Komponente a) ein im wesentlichen monomerenfreier Destillationsrückstand ist.

3. Verfahren nach Anspruch 1 und 2, dadurch gekennzeichnet, daß Komponente a) einen Gehalt an freien NCO-Gruppen unter 27 Gew.-% aufweist.

4. Verfahren nach Ansprüchen 1 bis 3, dadurch gekennzeichnet, daß Komponente a) einen Erweichungspunkt zwischen 50 und 160°C aufweist und daß Komponente b) ein Diol mit einem Molekulargewicht zwischen 62–300 ist.

5. Verfahren nach Ansprüchen 1 bis 4, dadurch gekennzeichnet, daß ein NCO/OH-Verhältnis von 0,4 : 1 bis 1 : 1 eingehalten wird.

6. Verfahren nach Ansprüchen 1 bis 5, dadurch gekennzeichnet, daß die Reaktion in einer zweiwelligen, kühlbaren Reaktionsschneckenmaschine mit gleichsinnig rotierenden Schneckenwellen

ausgeführt wird.

7. Verfahren nach Ansprüchen 1 bis 6, dadurch gekennzeichnet, daß man den als Sumpfphase der Destillation frisch anfallenden TDJ-Rückstandsteer direkt kontinuierlich in eine Reaktionsschneckenmaschine einführt.

8. Verwendung der nach Ansprüchen 1 bis 7 hergestellten Polyadditionsprodukte als Preß- und Sintermassen, vorzugsweise in Kombination mit lignocellulosehaltigen Werkstoffen.

9. Verwendung der nach Ansprüchen 1 bis 7 hergestellten Polyadditionsprodukte als reaktiver Füllstoff für vorzugsweise durch Polykondensationsreaktionen und Polymerisationsreaktionen hergestellte Kunststoffe.

10. Verfahren zur Herstellung von gegebenenfalls zellförmigen, flammwidrigen Polyurethankunststoffen durch Polyaddition von

A) Polyisocyanaten, sowie gegebenenfalls
B) gegenüber Isocyanaten reaktive Gruppen aufweisenden Verbindungen, in Gegenwart von
C) im Sinne der Isocyanat-Polyadditionsreaktion reaktive Gruppen aufweisenden Füllstoffen sowie gegebenenfalls
D) Aktivatoren, Treibmitteln, weiteren Füllstoffen und weiteren an sich bekannten Zusatzmitteln,

dadurch gekennzeichnet, daß als Komponente C) die gemäß Ansprüchen 1 bis 7 hergestellten Polyadditionsprodukte eingesetzt werden.

## Claims

1. A process for the production of polyaddition products containing urethane groups from the isocyanate-group-containing destillation residues obtained in the commercial production of tolylene diisocyanate and polyhydroxyl compounds, characterised in that

a) a destillation residue containing less than 12% by weight of monomeric tolylene diisocyanate, which accumulates as sump phase in the removal of monomeric tolylene diisocyanate from the crude phosgenation prduct of tolylene diamines and which has a free NCO-group content of less than 35% by weight and a softening point below 200° C,
is reacted continuously in a reaction extruder having selfcleaning screw geometry with
b) a compound containing at least two alcoholic hydroxyl groups which may also contain ionic groups and/or groups capable of salt formation, and having an average molecular weight of less than 600,
in an NCO/OH-equivalent ratio of less than 1,5 : 1 at temperatures of 50 to 220° C.

2. A process according to claim 1, characterised in that component a) is a substantially monomer-free distillation residue.

3. A process according to claims 1 and 2, characterised in that component a) contains less than 27% by weight of free NCO-groups.

4. A process according to claims 1 to 3, characterised in that component a) has a softening point between 50 and 160° C and in that component b) is a diol having a molecular weight between 62–300.

5. A process according to claims 1 to 4, characterised in that an NCO/OH-ratio of 0,4 : 1 to 1 : 1 is maintained.

6. Apracess according to claims 1 to 5, characterised in that the reaction is carried out in a twin-screw coolable reaction extruder the screws of which rotate in the same direction.

7. A process according to claims 1 to 6, characterised in that the TDI-residue tar freshly accumulating as the sump phase of the distallation is passed directly and continuously into a reaction extruder.

8. Use of the polyaddition products produced according to claims 1 to 7 as moulding and sintering compositions, preferably in combination with materials containing lignocellulose.

9. Use of the polyaddition products produced according to claims 1 to 7 as a reactive filler for plastics preferably produced by polycondensation reactions and polymerisation reactions.

10. A process for the production of optionally cellular flame-resistant polyurethane plastics by the polyaddition of

A) polyisocyanates and, optionally,
B) compounds containing isocyanate-reactive groups in the presence of
C) fillers containing groups which are reactive in the context of the isocyanate polyaddition reaction and, optionally,
D) activators, blowing agents, other fillers and other additives known per se,

characterised in that the polyaddition products produced according to claims 1 to 7 are used as component C).

## Revendications

1. Procédé de préparation de poduits de polyaddition, portant des groupes uréthanne, à partir de résidus de distillation, contenant des groupes isocyanate, de la production industrielle du toluylène-diisocyanate et de composés polyhydroxylés, caractérisé en ce que:

a) on fait réagir en continu dans une machine de réaction à vis avec géométrie auto-nettoyante des vis, à des températures de 50 à 220° C, à un rapport inférieur à 1,5 : 1 entre les équivalents de NCO et les équivalents de OH, un résidu de distillation contenant moins de 12% en poids de toluylène-diisocyanate monomère, obtenu en phase de culot à l'élimination du toluylène-diisocyanate monomère à partir du produit de phosgénation brut de toluylène-diamines et qui contient moins de 35% en poids de groupes NCO libres et présente un point de ramollissement inférieur à 200° C, avec
b) un composé portant au moins deux groupes hydroxy alcooliques, le cas échéant des groupes ioniques et/ou aptes à la salification, et ayant un poids moléculaire moyen inférieur à 600.

2. Procédé selon la revendication 1, caractérisé en ce que le composant a) est un résidu de distillation essentiellement exempt de monomère.

3. Procédé selon les revendications 1 et 2, caractérisé en ce que le composant a) contient moins de 27% en poids de groupes NCO libres.

4. Procédé selon les revendications 1 à 3, caractérisé en ce que le composant a) a un point de ramollissement de 50 à 160° C et le composant b) est un diol de poids moléculaire allant de 62 à 300.

5. Procédé selon les revendications 1 à 4, caractérisé en ce que le rapport NCO/OH est maintenu entre 0,4 : 1 et 1 : 1.

6. Procédé selon les revendications 1 à 5, caractérisé en ce que la réaction est effectuée dans une machine de réaction à vis à deux axes, refroidissable, avec axes de vis tournant dans le même sens.

7. Procédé selon les revendications 1 à 6, caractérisé en ce que le goudron résiduel de TDI fraîchement obtenu en phase de culot à la destillation est envoyé directement, en continu, dans une machine de réaction à vis.

8. Utilisation des produits de polyaddition préparés par un procédé selon les revendications 1 à 7 en tant que matières à mouler par compression et matières à fritter, de préférence en combinaison avec des matériaux lignocellulosiques.

9. Utilisation des produits de polyaddition préparés par un procédé selon les revendications 1 à 7, en tant que matières de charge réactives pour des résines synthétiques préparées de préférence par des réactions de polycondensation et des réactions de polymérisation.

10. Procédé de préparation de résines synthétiques de polyuréthannes ignifuges éventuellement alvéolaires, par polyaddition de:

A) des polyisocyanates, et éventuellement
B) des composés portant des groupes réactifs à l'égard des isocyanates, en présence de
C) des matières de charges portant des groupes réactifs dans la réaction de polyaddition des isocyanates, et le cas échéant,
D) des activateurs, des agents gonflants, d'autres matières de charge et d'autres additifs connus en soi

caractérisé en ce que l'on utilise en tant que composant C) les produits de polyaddition préparés par le procédé selon les revendications 1 à 7.